(19) Europäisches Patentamt / European Patent Office / Office européen des brevets

(11) **EP 4 697 540 A1**

(12) **EUROPEAN PATENT APPLICATION**

(43) Date of publication:
**18.02.2026 Bulletin 2026/08**

(21) Application number: **24194050.1**

(22) Date of filing: **12.08.2024**

(51) International Patent Classification (IPC):
**H02J 3/24** *(2006.01)*    **H02J 3/28** *(2026.01)*
**H02J 15/00** *(2026.01)*

(52) Cooperative Patent Classification (CPC):
**H02J 3/00142;** C25B 1/04; H02J 3/28; H02J 3/30;
H02J 3/32; H02J 15/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Energy Global GmbH & Co.
KG
81739 München (DE)**

(72) Inventors:
• **Langenberg, Nils
90461 Nürnberg (DE)**
• **Bendig, Marvin
90513 Zirndorf (DE)**
• **Craciun, Bogdan
91052 Erlangen (DE)**
• **Loku, Fisnik
90439 Nürnberg (DE)**
• **Schumann, Sven
91452 Wilhermsdorf (DE)**

(54) **OVERLOAD CAPACITY FOR ELECTROLYSIS PLANTS**

(57) Disclosed is a system comprising an electrolysis system (20), an additional electric load system (30) and a controller (50). The system is configured for receiving electric power from a power grid (10). The electrolysis system comprises at least one electrolysis unit (22a). The additional electric load system is configured for dissipating and/or storing electric energy from the power grid based on a control signal. The power grid comprises a grid frequency. The controller is configured for monitoring the grid frequency, for generating the control signal based on the grid frequency and for sending the control signal to the additional electric load system. Further disclosed are a corresponding method, a production facility, a computer program-product and a computer-readable medium.

Fig. 2

EP 4 697 540 A1

## Description

Technical field

The present invention relates to a system for electrolysis as well as a method for operating said electrolysis plant, in particular to a large scale electrolysis plant configured for droop control in overfrequency. The present invention further relates to a corresponding production facility, a computer-program product and a computer-readable medium.

Technical Background

The number of installed large-scale electrolysis systems connected to the power grid is continuously increasing. Such systems perform electrochemical processes, particularly electrolysis of water in order to generate hydrogen, e.g., by means of proton exchange membrane electrolysis (PEM) or alkaline electrolysis.

Such electrolysis systems are usually designed to operate at their maximum power point. In other words, such systems are usually not designed with overload capacities, i.e., for power intake substantially above their specified nominal power. The power consumption of single electrolysis units ranges in the order of magnitude of at least 10 MW, with the capacity of complete electrolysis plants in the order of magnitude of up to 10 GW.

At the same time, the share of power provided to the power grid by renewable energy systems increases. The power output of renewable energy systems is often strongly dependent on environmental conditions that cannot be influenced, e.g., sunlight and wind conditions. Thus, fluctuations of the amount of power provided to the power grid are expected to increase.

In the public power grid, fluctuations in a power balance result in frequency deviations: If the power provided to the grid drops compared to the consumed power, a grid frequency drops. If the power provided to the grid increases compared to the consumed power, the grid frequency increases.

For a primary frequency response or limited frequency sensitivity mode (LFSM) in overfrequency events (LFSM-O), power plants with controllable power output as well as controllable power consumption units are controlled based on the grid frequency. In case of a decrease of the grid frequency, output power of power plants contributing to primary frequency response is increased, and power intake of controllable power consumers is decreased. Thus, the grid frequency may be increased. Likewise, in case of an increase of grid frequency, output power of power plants is reduced, while the power intake of controllable power consumers is increased. Thus, the grid frequency may be decreased. In this manner, the grid frequency may be stabilized by power plants with adjustable power output as well as power consumer with adjustable power intake.

However, neither all power plants nor all consumers can participate in primary frequency response. For example, as discussed above, renewable energy systems often cannot increase their power output. Or, for example, electrolysis systems are typically not designed for overload capacity. Thus, currently, electrolysis systems are not suitable for frequency response in case of an increase of grid frequency.

However, an occurrence rate of overfrequency-events usually ranges between one and several hundred events per year, each event usually comprising a duration between 100 ms and several seconds. Therefore, designing electrolyser systems with overload capacity to be suitable for frequency response during such overfrequency-events is currently economically and technically inefficient. Also, feasible power gradients in electrochemical systems are limited.

Summary of the invention

It is an object of the invention to overcome or at least alleviate the shortcomings of the prior art.

In particular, it is an object of the present invention to provide an electrolysis system configured for active frequency response during overfrequency-events (LFSM-O), as well as a corresponding method and computer program product.

This object is achieved by the subject-matter of the independent claims. Preferred embodiments of the invention are defined in the dependent claims, the figures and the following description.

In a first embodiment, a system comprising an electrolysis system, an additional electric load system and a controller is provided. The system is configured for receiving electric power from a power grid. The electrolysis system comprises at least one electrolysis unit. The additional electric load system is configured for dissipating and/or storing electric energy from the power grid based on a control signal. The power grid comprises a grid frequency. The controller is configured for monitoring the grid frequency, for generating the control signal based on the grid frequency and for sending the control signal to the additional electric load system.

Thus, an electrolysis system configured for dynamic increased power intake during overfrequency events is provided.

A further option may be that the electrolysis system may be designed without inherent overload capacities, thus allowing for a more efficient operation of the system under normal conditions and/or less production and maintenance efforts.

The at least one electrolysis unit may, for example, be at least one electrolyser stack. The at least one electrolyser stack may, for example, comprise a plurality of electrolytic cells for performing an electrochemical process. For example, the electrolytic cells may be configured for electrolysis of water to generate hydrogen and oxygen.

The at least one electrolysis unit may, for example, be configured for proton exchange membrane (PEM) electrolysis or alkaline electrolysis.

The power grid may be a public power grid. In particular, the power grid may be a high-voltage power grid.

The grid frequency may be a frequency of alternating current provided by the power grid. The grid frequency may be specific to the country or region in which the power grid is located. The grid frequency of the public power grid often comprises a nominal value of 50Hz or 60 Hz.

The controller may be configured for generating a control signal instructing the additional electric load system to store and/or dissipate energy at least if the grid frequency deviates from a predetermined frequency range.

In particular, the controller may be configured for generating such a control signal instructing the additional electric load system to store and/or dissipate energy at least if the grid frequency exceeds a frequency threshold value.

Thus, the system may be configured for active frequency response at least during overfrequency events.

The frequency range may for example be a tolerated frequency range, such as 50 Hz $\pm$ 200 mHz. Frequency fluctuations within the frequency range may be considered acceptable, and frequency response may, for example, only be initiated if the grid frequency deviates from this range.

The frequency threshold value for generating the control signal instructing the additional electric load system to store and/or dissipate energy may for example be an upper end point of said frequency range, for example 50.2 Hz.

The system, particularly the electrolysis system, may comprise a first power converter system configured for providing direct current to the at least one electrolysis unit.

The first power converter system may be configured for providing direct power to the at least one electrolysis unit. For example, the first power converter system may comprise a transformer, an AC-DC power converter and/or a DC-DC power converter.

The first power converter system may comprise a plurality of first power converters.

The additional electric load system may comprise a resistive load and/or an electric energy storage system. Further, the additional electric load system may comprise a second power converter system configured for providing direct current to the resistive load and/or the energy storage system.

Thus, the additional load system may be configured for controllable and quick dissipation and/or storage of electric energy.

In particular, a resistive load may allow for a rapid increase in power intake. An electric energy storage system may, allow for a higher electrical efficiency of the system.

The additional electrical load system may also comprise a combination of a resistive load and an energy storage system. For example, the additional load system may comprise an energy storage system with a bypass circuit with a flyback diode and resistors in the bypass circuit.

Thus, while admissible gradients of power intake are increased compared to the use of only an energy storage, an efficiency of the system may be higher than with a resistive load only.

In the present disclosure, the term "energy storage system" is intended to not specify a system configured for electrochemical processes, apart from electrochemical processes performed in battery systems. In other words, the term "energy storage system" is intended not to specify a system configured for an electrochemical process comprising removal of the reduction products from the energy storage system. Thus, the term "energy storage system" is intended not to refer, e.g., to an electrolyser or an electrolyser-fuel cell combination.

The resistive load may comprise a connection to a heat exchanger. Thus, electric excess power may be used as heat.

Additionally or alternatively, the resistive load may comprise a connection to a cooling system. Thus, heating of the resistive load may be limited.

The system may comprise a medium-voltage bus (MV-bus) and a high voltage AC/medium voltage AC-transformer (HVAC/MVAC-transformer). The MV-bus may be configured for being connected to the power grid via the high voltage AC/medium voltage AC-transformer.

In other words, the system may comprise a transformer configured for transforming high voltage alternating current, e.g. from the power grid, to medium voltage alternating current.

The medium-voltage bus may be a direct current bus or an alternating current bus. Thus, for example, a connection of the medium-voltage bus and the power grid may further comprise an AC-DC converter, such as a rectifier.

The first power converter system and the second power converter system may each be connected to the MV-bus of the system. In other words, the first and the second power converter system may each be connected to the power provided by MV-bus, i.e., at a voltage level of the MV-bus.

Thus, a plant layout is more flexible, as the additional electric load system and the at least one electrolysis unit can be placed at a greater distance with limited resistive losses due to a length of an electric connection.

Alternatively, the first power converter system may be connected to the MV-bus and may be configured for providing direct current to the at least one electrolysis unit as well as the second power converter system.

Thus, a more integrated design of electrolyser rows and energy storage units/resistive load units may be enabled.

The controller may, for example, be arranged at a superior control level.

Alternatively, a functionality of the controller may be provided by a controller of the electrolysis system and/or a controller of the additional load system, particularly by a controller of the first power converter system and/or a controller of the second power converter system. In other words, the controller may be a converter-near controller. Thus, optionally advantageously a faster response to frequency deviations may be provided.

Regardless of where exactly the controller's functionality's are provided, when reference is be made to "the controller", any meaning such controller or plurality of controllers is meant.

The resistive load may be DC-controlled. Thus, improved control of a level of the power to be dissipated may be facilitated.

The energy storage system may comprise at least one of a battery energy storage system, a super capacitor energy storage system and a flywheel energy storage system. The energy storage system may comprise a plurality of energy storage units, which may be arranged centrally or in a distributed manner, as discussed above.

The controller may be configured for droop control. In other words, the controller may be configured for generating the control signal instructing the additional electric load system to store and/or dissipate energy in line with droop control logic.

As discussed above, for stabilizing the grid frequency, in case of an increase of the grid frequency above a certain frequency threshold value, such as the upper frequency threshold of the frequency range, the power output of power plants configured for active frequency response may be decreased and the power intake of controllable loads may be increased.

Droop control is a well-known control scheme for power provided by power plants using electromechanical generators. For deviations of the grid frequency from the predetermined frequency range, droop control specifies a ratio of relative frequency deviation from the predetermined frequency range to relative increase/decrease of power.

Droop control is typically defined by

$$\sigma = -\frac{\frac{\Delta f}{f_n}}{\frac{\Delta P}{P_n}}$$

where $\Delta f$ is the frequency deviation with respect to the predetermined frequency range, $f_n$ is the nominal frequency, $\Delta P$ is the increase/decrease in power, $P_n$ is the nominal power intake of a consumer or power output of a power plant, and $\sigma$ is usually a constant value.

Thus, by using a controller configured for droop control, a frequency response providing for increased stability of the power grid may be provided.

The controller may also be configured for controlling a reduction of the power intake of the electrolysis system if the grid frequency decreases below a lower frequency threshold of the above-mentioned frequency range. In such a case, the decrease of the power intake may also be controlled in line with droop control logic.

The electrolysis system may comprise a plurality of electrolysis units that are arranged together. In particular, the electrolysis units may be arranged in electrolyser rows that are switched in parallel.

For example, the electrolysis units may be electrolysis stacks. A set of electrolysis stacks may be arranged in series, e.g., as electrolyser row. Thus, a voltage of the row may be higher than in case of a parallel arrangement of the stacks in the rows.

Further, the rows may be arranged in parallel, thus facilitating connection to a common power supply, such as the MV-bus.

In some embodiments, the electrolysis system may comprise substantially no overload capacity. In other words, the electrolysis system may be configured for being operated substantially at its maximum power level.

The energy storage system may comprise a plurality of energy storage components. The plurality of energy storage components may be arranged together.

For example, in case of an electrolysis plant with a capacity of several 100 MW to a few GW, it may be advantageous to provide for one central energy storage system providing the energy storage functionality, thus optionally advantageously allowing for a more direct connection to the power grid and increased efficiency.

The additional electric load system, in particular the energy storage system, may be configured for providing electric energy to the first electric load system if the grid frequency does not exceed the frequency threshold value. In other words, when the grid frequency is in a tolerated range or below the frequency threshold value, the additional electric load system may be configured for providing stored power to the electrolysis system.

For example, the controller may be configured for generating a corresponding control signal.

The additional electric load system may be configured for dissipating and/or storing at least 2%, preferably at least 5 % of a nominal power of the electrolysis system.

Thus, a sufficient frequency-dependent gradient of power intake may be provided in a sufficiently wide frequency range, which may optionally enable the system to participate in primary frequency response in the power grid.

The system may be configured for operating in limited frequency sensitive mode-overfrequency (LFSM-O).

The limited frequency sensitive mode-overfrequency (LFSM-O) may be according to ENTSO-E specification "Limited frequency sensitive mode" dated January 31, 2018.

Thus, the system may contribute to grid stabilisation in case of overfrequency events that were not successfully mitigated by frequency containment reserves of the power grid.

Particularly, the system may also be configured for operating in limited frequency sensitive mode-overfrequency and limited frequency sensitive mode-underfrequency. Thus, optionally advantageously, improved reaction to overfrequency events and underfrequency events may be provided.

The control signal may for example be an instruction set. The control signal may also simply comprise a single control variable or a plurality thereof, e.g., a target value of power to store/dissipate, or a target value of power to be dissipated by the resistive load and a target value of power to be stored by the energy storage system.

In case that energy is stored by the energy storage system, the control signal may also comprise an indication referring to power to be provided from the energy storage system to the power grid and/or the electrolysis system.

In a second embodiment, a method for operating a system comprising an electrolysis system, a controller and an additional electric load system is disclosed.

Definitions, details and/or advantages discussed in the context of the system may respectively apply to the method, too.

The method comprises operating the electrolysis system with electric power received from the power grid. Further, the method comprises dissipating and/or storing electric energy from the power grid by the additional electric load system based on the control signal. The method also comprises monitoring the frequency of the power grid, generating the control signal based on the grid frequency, and sending the control signal to the additional electric load system by the controller.

Thus, operation of an electrolysis system suitable for increased power intake from the power grid in case of overfrequency events is provided.

Also, the method may allow for increased power intake of an electrolysis system without inherent overload capacities during overfrequency events.

Generating the control signal by the controller may comprise generating the control signal instructing the additional electric load system to store and/or dissipate energy, at least if the grid frequency deviates from the predetermined frequency range.

In particular, the method may comprise the controller generating the control signal instructing the additional electric load system to store and/or dissipate energy at least if the grid frequency exceeds the frequency threshold value.

Thus, the method may provide for active frequency response at least during overfrequency events.

The method may comprise using the above-disclosed system.

In a third embodiment, a production facility is disclosed. The production facility comprises the above-disclosed system.

The production facility may for example be an electrochemical processing plant, such as a large-scale electrolyser plant.

The production facility may comprise a processing capacity of at least 10 MW.

In a fourth embodiment, a computer-program product is disclosed. The computer program product may comprise instructions to cause the above-disclosed system to execute the above-disclosed method.

For example, the computer-program product may comprise instructions configured for being executed by the controller.

In a fifth embodiment, a computer-readable medium having stored thereon the computer-program product is disclosed.

The computer readable storage medium may, for example, be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer readable storage medium may be a RAM or a ROM, wherein particularly a flash memory is used. The computer readable storage medium may also be a data communication network which allows downloading a program code, such as the Internet, or further systems.

Definitions, details and/or advantages discussed in the context of the system or the method may respectively apply to the computer-program product and the computer-readable medium, too.

The controller may, for example, comprise said computer-readable storage medium and optionally means to execute said method. The controller may be a programmable logic controller (PLC). The controller may comprise at least one processor and at least one storage unit. In other words, the at least one processor may be a microprocessor and/or a microcontroller and/or a FPGA (Field Programmable Gate Array) and/or a DSP (Digital Signal Processor). The controller may be a server, a personal computer, a laptop computer, an industrial PC and/or a system-on-a-chip (SoC). The controller may also be implemented in software, e.g., on a cloud-computer environment or in a distributed system.

The controller may further comprise means to execute said method as described above, particularly means to control the additional electric load system and/or the electrolysis system. Particularly, the controller may comprise means to control the second power converter system and/or the first power converter system. In particular, the controller may comprise an interface for transmitting the control signal to the additional electric load system.

Also, the controller may comprise means for sensing the grid frequency, such as a voltmeter configured for sensing frequency, a digital oscilloscope or the like.

In still another embodiment, a system comprising a first electric load system and a second electric load system is disclosed. The system may be configured for receiving electric power from the power grid.

In this embodiment, the first electric load system may comprise at least one electric load, such as at least one electrolysis unit. The first electric load system may comprise substantially no overload capacity, as, e.g., in case of a large scale electrolysis system or a system configured for carrying out another continuous electrochemical process. The first electric load system may, for example, be the electrolysis system.

In this embodiment, the second electric load system may be configured for dissipating and/or storing electric energy from the power grid based on the control signal. The second electric load system may, for example, be the additional electric load system. The power grid may comprise the grid frequency.

In this embodiment, the system comprises the controller, the controller being configured for monitoring the grid frequency, for generating the control signal based on the grid frequency and for sending the control signal to the second electric load system.

The invention also relates to realizations comprising a combination of the features of several of the described aspects.

Brief description of the drawings

The present disclosure will be more readily appreciated by reference to the following detailed description when being considered in connection with the accompanying drawings in which:

Figure 1 shows a schematic view of a production facility for electrolysis connected to a power grid.
Figure 2 shows a schematic view of an embodiment of a system comprising a MVAC-bus and a resistive load;
Figure 3 shows a schematic view of an embodiment of a system comprising a MVDC-bus and the resistive load;
Figure 4a shows a schematic view of another embodiment of the system comprising the MVAC bus and the resistive load;
Figure 4b shows a schematic view of another embodiment of the system comprising the MVDC-bus and the resistive load;
Figure 5 shows a schematic view of an embodiment of a system comprising the MVAC-bus and an energy storage system;
Figure 6 shows a schematic view of an embodiment of a system comprising the MVDC-bus and the energy storage system;
Figure 7a shows a schematic view of another embodiment of the system comprising the MVAC bus and the energy storage system;

Figure 7b shows a schematic view of another embodiment of the system comprising the MVDC-bus and the energy storage system; and
Figure 8 shows a schematic visualization of a method.

In the following, the invention will be explained in more detail with reference to the accompanying figures. In the Figures, like elements are denoted by identical reference numerals and repeated description thereof may be omitted in order to avoid redundancies. Further, in some figures, elements may be omitted despite being present for improved intelligibility.

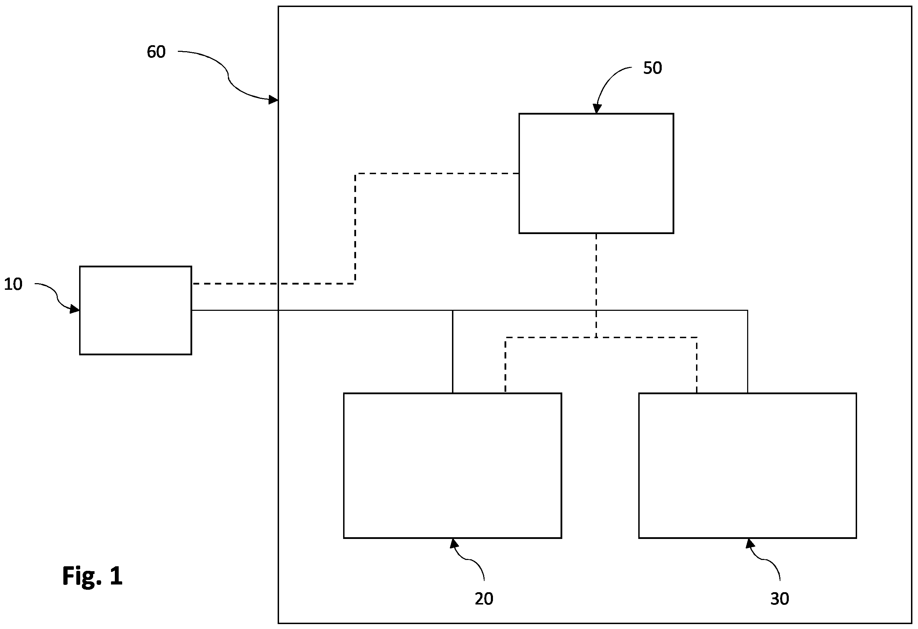

Figure 1 shows an embodiment of a production facility 60 for performing electrolysis.

The production facility may, for example, be an electrochemical processing plant, such as a large-scale electrolyser.

The production facility 60 comprises a system comprising an electrolysis system 20 and an additional electric load system 30. The electrolysis system 20 is configured for generating hydrogen from water by electrolysis, such as proton membrane exchange (PEM) electrolysis or alkaline electrolysis.

The electrolysis system 20 may comprise a capacity of 10 MW up to several GW. That is, the electrolysis system 20 may be configured for performing electrolysis at an intake level of electric power of 10 MW up to several GW.

When implemented in industrial scale, such electrolysis systems usually comprise substantially no overload capacity. In other words, electrolysis systems 20 are usually designed for continuous operation substantially at their maximum power point.

In Figure 1, power connections are indicated by full lines. Connections for transmitting information are indicated by dashed lines.

As can be seen, in the example of Figure 1, the electrolysis system 20 and the additional electrical load system 30 comprise a connection to the power grid 10.

The additional electrical load system 30 comprises a resistive load 32 and/or an energy storage system 34 (not shown in Fig. 1).

The resistive load 32 is configured for dissipating energy from the grid 10. The energy storage system 34 is configured for storing energy from the grid 10.

Thus, the system shown in Figure 1 is configured for increasing an intake of power during continuous operation of the electrolysis system 20 at its nominal power intake, even though the electrolysis system 20 comprises substantially no overload capacity.

The system comprises a controller 50. The controller 50 is configured for monitoring a grid frequency. For example, the controller 50 may comprise a voltage meter or other sensing means to measure or sense the grid frequency. However, the grid frequency may also be communicated to the controller 50, e.g., from a server of a transmission system operator.

The controller 50 is configured for generating a control signal based on the grid frequency, and for sending the control signal to the additional electric load system 30.

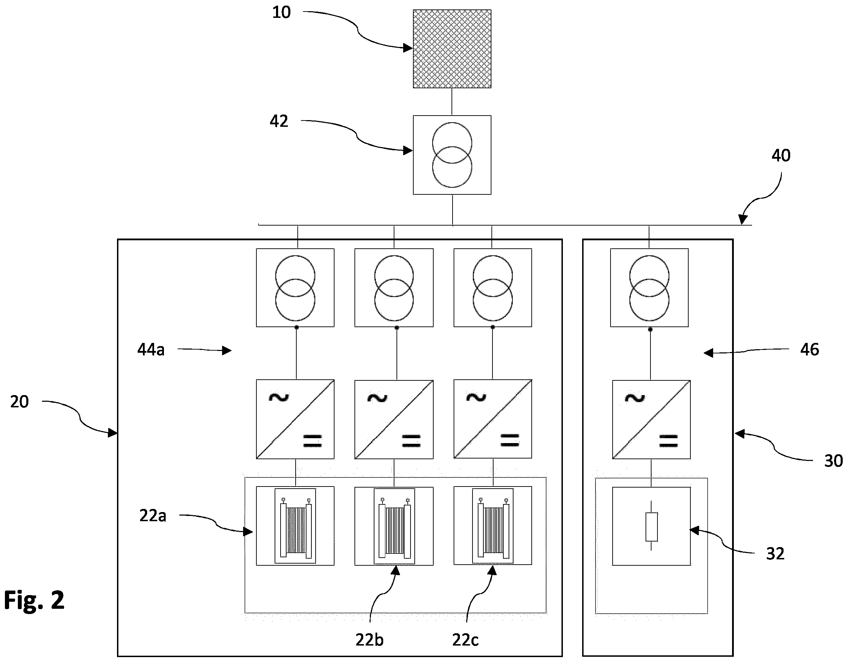

While the controller 50 may be a controller 50 at a superior level, as shown in Fig. 1, a functionality of the controller 50 or the entire functionality of the controller 50 may also be provided by a controller associated with the electrolysis system 20 and/or a controller associated with the additional load system 30, such as one or more controller(s) associated with respective converter systems, which will be discussed with reference to Fig. 2.

In the example of Fig. 1, the controller 50 is configured for generating a control signal instructing the additional electric load system 30 to store and/or dissipate energy at least if the grid frequency deviates from a predetermined frequency range. In particular, the controller 50 is configured for generating such a control signal if the grid frequency rises above a frequency threshold value.

The frequency threshold value may be specific to the power grid 10 and typically corresponds to an upper end point of an acceptable frequency band. Once the grid frequency deviates from the predetermined frequency range, that is, an overfrequency event or an underfrequency event occurs, primary frequency response capacity or LFSM-O functions are activated.

For example, in the transmission network in continental Europe, this frequency threshold value is currently set to 50.2 Hz.

In case of underfrequency events, primary frequency response as well as limited frequency sensitivity mode-overfrequency (LFSM-O) aims to increase power production and to decrease power intake of controllable consumers.

In case of overfrequency events, primary frequency response aims to decrease power production and to increase power intake of controllable consumers. This response can be achieved with the above-disclosed operation of the system and the corresponding control mode of the controller 50.

Thus, the system of Figure 1 as well as the production facility 60 comprising said system are suitable for providing for primary frequency and LFSM response capacity during overfrequency events, and optionally also during underfrequency events.

In a particular example, the additional electric load system may comprise the resistive load 32 and the energy storage system 34. As resistive loads usually allow for steeper power gradients than energy storage systems, such as battery storage systems, a quick reaction to overfrequency events may be achieved. The energy storage system 34, whose power intake is also increasing if the overfrequency event persists, may simultaneously start to store electric power and, e.g., successively reduce an amount of power that needs to be dissipated.

An embodiment of the system is shown in Figure 2.

The system of Figure 2 comprises the electrolysis system 20 and the additional electric load system 30. Also, the system comprises a connection to the power grid 10 and a controller 50 (not shown).

The electrolysis system 20 shown in Figure 2 comprises a plurality of electrolyser rows 22a, 22b, 22c. Each electrolyser row 22a, 22b, 22c comprises a plurality of electrolyser units, such as a plurality of electrolyser stacks.

In the example of Figure 2, the system comprises a high-voltage-AC/medium voltage AC-transformer (HV/MV transformer) 42 transforming power from the power grid 10 from high voltage to medium voltage.

The term "high voltage" may, for example, refer to voltage levels above 100 kV. Exemplary voltage levels at high voltage include 110 kV, 220 kV or 380 kV. However, also different voltage levels may be suitable for high voltage.

The term "medium voltage" may, for example, refer to voltage levels between 10 kV and 100 kV. Exemplary voltage levels at medium voltage include 10 kV, 20 kV, 30 kV, 34.5 kV or 66 kV. Again, also different voltage levels may be suitable for medium voltage.

The power at medium voltage level is conducted by a medium-voltage bus (MV-bus) 40. In the example of Fig. 1, the MV-bus is an alternating current medium voltage bus.

The electrolysis system 20 further comprises a first power converter system comprising a plurality of first power converters 44a. The first power converter system is configured for providing direct current to the electrolyser rows 22a, 22b, 22c. In the example of Fig. 1, each first power converter comprises an AC-transformer and a power converter configured for generating direct current, such as a rectifier.

In the example of Figures 2-4b, the additional electric load system 30 comprises a resistive load 32. The resistive load 32 may for example comprise a plurality of resistors or choppers.

The additional electric load system 30 also comprises a second power converter system 46. In the example of Fig. 1, the second converter system 46 comprises an AC-transformer and a power converter configured for generating direct current. The second power converter system 46 is configured for controlling a voltage level and/or a current level of power provided to the resistive load 32. Thus, a level of power dissipated by the resistive load 32 can be controlled.

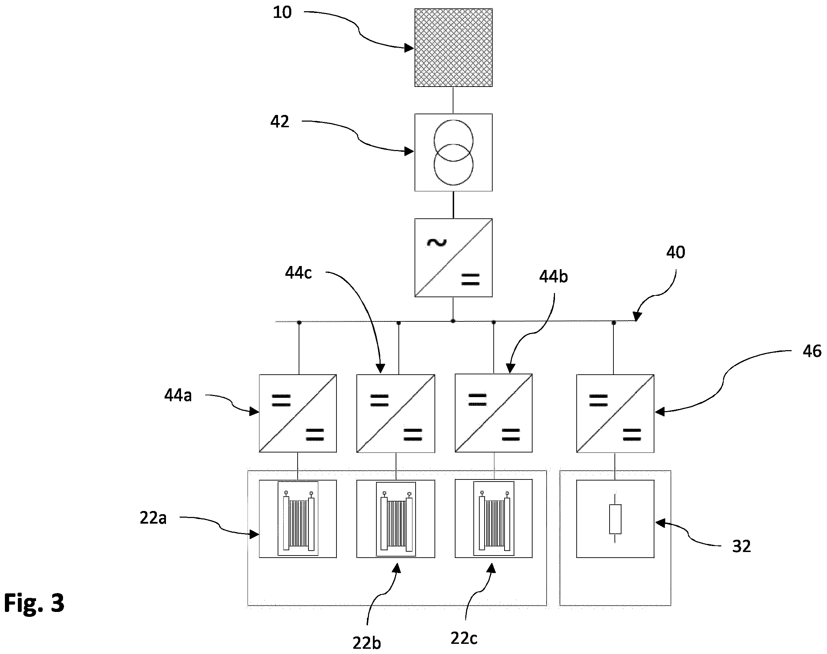

For clarity, reference numerals of the electrolysis system 20 and the additional electric load system 30 are omitted in Figures 3-7b., despite of the fact that these systems are present in the corresponding embodiments. Instead, components of these systems are shown and provided with reference numerals.

Figure 3 shows another embodiment of the system, which is generally similar to the embodiment of the system shown in Figure 2. However, in Figure 3, the MV-bus 40 comprises a connection to the power grid by means of the HV/MV transformer 42 and a power converter configured for providing direct current to the MV-bus 40. The MV-bus 40 is thus a medium voltage direct current bus.

In the embodiment of Figure 3, the first power converters 44a, 44b, 44c of the first power converter system are power converters configured for converting direct current, i.e., changing a power level of provided direct current.

Also the second power converter 46 of the second power converter system is configured for converting direct current.

The embodiments of Figures 2 and 3 allow for power transmission between the electrolysis system 20 and the additional electric load system 30 at medium voltage. Thus, transport losses may be reduced. Also, a design of the system may be simplified, as power can be transmitted by the common MV-bus 40.

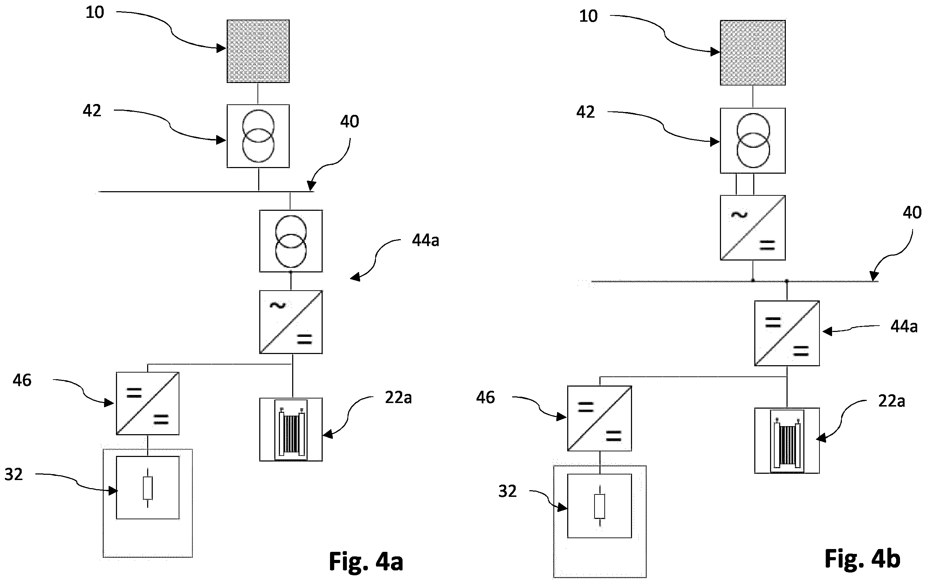

Figure 4a shows another embodiment of the system. As the system of Figures 2-3, the system of Fig. 4a comprises the electrolysis system 20 and the additional electric load system 30. The additional electric load system 30 also comprises a resistive load 32.

In Fig. 4a, the MV-bus 40 is an alternating current medium voltage bus. Thus, the MV-bus 40 provides alternating current to the first power converter system, particularly the first power converter 44a. The first power converter system provides direct current to the electrolyzer unit 22a. In contrast to Figures 2-3, the first power converter system also provides direct current to the second power converter system.

The second power converter system comprises the second power converter 46. The second power converter system is configured for controlling a voltage level and/or a current level of the direct current provided to the resistive load 32.

The embodiment shown in Figure 4b is similar to the embodiment shown in Figure 4a. However, the MV-bus 40 is a direct current medium voltage bus. Thus, in Figure 4b, the first power converter system receives direct current from the MV-bus 40 and converts direct current.

The embodiments of Figures 4a and 4b allow for a more integrated design of the electrolyser rows and the resistive load 32 and/or a portion of the resistive load 32.

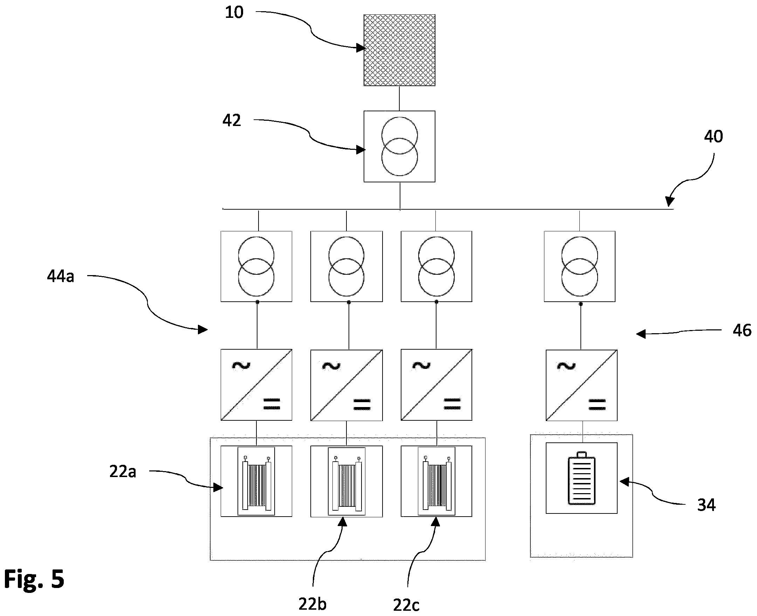

Figure 5 shows an embodiment of the system similar to the embodiment shown in Figure 2. As in Figure 2, the system comprises the HV/MV transformer 42, the MV-bus 40, the electrolysis system 20 and the additional electric load system 30.

The MV-bus 40 of the embodiment shown in Figure 5 is an alternating current medium voltage bus 40.

In contrast to the example shown in Fig. 2, the additional electric load system 30 in Fig. 5 comprises an energy storage system 34.

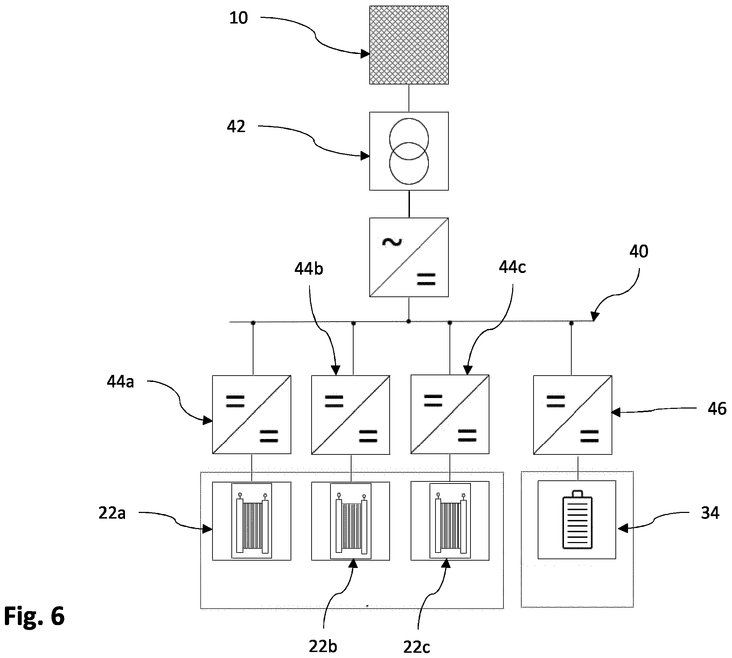

The embodiment of the system shown in Figure 6 corresponds to the embodiment shown in Figure 3. As in the embodiment shown in Figure 3, the system comprises the electrolysis system 20, the additional electric load system 30 and the MV-bus 40. The MV-bus 40 is a direct current medium voltage bus.

However, in Figure 6, the additional electric load system 30 comprises an energy storage system 34.

The embodiments of the system shown in Figures 5-6 optionally advantageously allow for further use of the additional electric power received from the power grid 10, e.g., after an overfrequency event has ended.

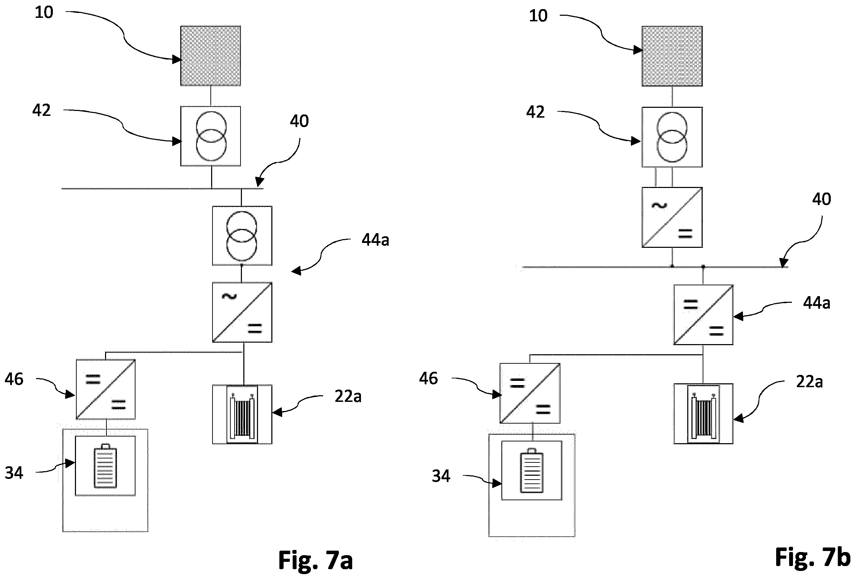

Figures 7a and 7b show still two other embodiments of the system.

The embodiments shown in Figures 7a and 7b generally corresponds to the embodiments shown in Figures 4a and 4b, with the difference that the additional electric load system 30 comprises an energy storage system 34.

In the embodiment shown in Figure 7a, the MV-bus 40 is an alternating current medium voltage bus, as discussed with respect to Fig. 4a. In the embodiment shown in Fig. 7b, the MV-bus 40 is a direct current medium voltage bus, as discussed with respect to Fig. 4b.

As discussed with respect to Figure 1, the additional electrical load system 30 may comprise an energy storage system 34 as well as a resistive load 32. Thus, while in Figures 2-4b, only a resistive load 32 is shown, and in Figures 5-7b, only an energy storage system 34 is shown, the person skilled in the art will easily understand that the example embodiments with a resistive load 32 and with an energy storage system 34 may be combined.

Also, the person skilled in the art will easily understand that the number of electrolyser rows 22a, 22b, 22c, components of the energy storage system 24 and resistive loads 32 may vary.

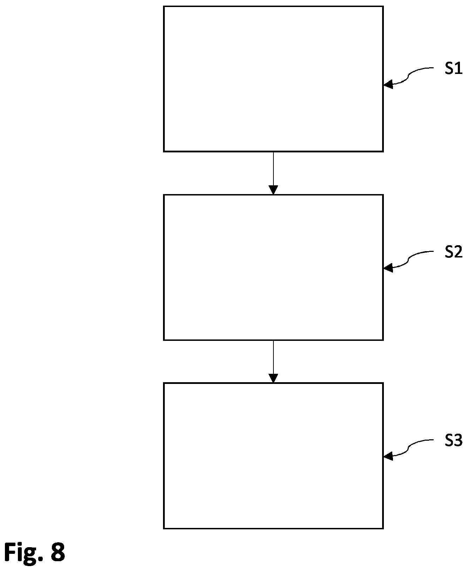

Figure 8 shows a schematic flow chart of a method for operating a system comprising the electrolysis system 20. The system of the embodiment shown in Figure 8 further comprises the controller 50 and the additional electric load system 30.

In the example of Fig. 8, the method comprises three steps S1, S2, S3.

In step S1, the electrolysis system 20 is operated with power received from the power grid 10. In step S2, electric energy from the power grid 10 is dissipated and/or stored by the additional electric load system 300 based on a control signal. In step S3, the frequency of the power grid 10 is monitored by the controller 50. Further, in step S3, a control signal is generated by the controller 50 based on the grid frequency, and the control signal is sent to the additional electric load system 30.

The person skilled in the art will easily understand that these three steps may be executed in parallel: For example, the controller 50 may typically monitor the grid frequency during operation of the electrolysis system 20. Also, as set out above, in case of overfrequency events, the electrolysis system 20 is operated and additionally, electric energy from the power grid is dissipated and/or stored by the additional electric load system 30.

As set out above, the controller 50 may be a superior controller, or the controller 50 may, for example, be a controller of electrolysis system 20 and/or the additional load system 30, such as a controller of the first or second power converter system.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

**Claims**

1.  A system, comprising an electrolysis system (20), an additional electric load system (30) and a controller (50), wherein the system is configured for receiving electric power from a power grid (10),

    wherein the electrolysis system (20) comprises at least one electrolysis unit (22a, 22b, 22c),
    wherein the additional electric load system (30) is configured for dissipating and/or storing electric energy from the power grid (10) based on a control signal,
    wherein the power grid (10) comprises a grid frequency, and
    wherein the controller (50) is configured for monitoring the grid frequency, for generating the control signal based on the grid frequency and for sending the control signal to the additional electric load system (30) .

2.  The system according to the preceding claim, wherein the controller (50) is configured for generating a control signal instructing the additional electric load system (30) to store and/or dissipate energy at least if the grid frequency deviates from a predetermined frequency range, particularly exceeds a frequency threshold value.

3.  The system according to any of the preceding claims, wherein the electrolysis system comprises a first power converter system configured for providing direct current to the at least one electrolysis unit (22a, 22b, 22c).

4.  The system according to any of the preceding claims,

    wherein the second electric load system (30) comprises a resistive load (32) and/or an energy storage system (34), and
    wherein the second electric load system (30) comprises a second power converter system configured for providing direct current to the resistive load (32) and/or the energy storage system (34).

5.  The system according to claims 3 and 4, wherein the system comprises a medium-voltage bus (MV-bus) (40) and a high voltage AC/medium voltage AC-transformer (HVAC/MVAC-transformer) (42),

    wherein the MV-bus (40) is configured for being connected to the power grid (10) via the high voltage AC/medium voltage AC-transformer (HVAC/MVAC-transformer) (42),
    wherein

    i. the first power converter system and the second power converter system are each connected to the MV-bus (40) of the system, or
    ii. the first power converter system is connected to the MV-bus (40) and is further configured for providing direct current to the at least one electrolysis unit (22a, 22b, 22c) and the second power converter system,

    wherein optionally, the controller (50) is a converter-near controller.

6.  The system according to any of the preceding claims with the features of claim 3, wherein the resistive load (32) is DC-controlled.

7.  The system according to any of claims 3-6, wherein the energy storage system (34) comprises at least one of a battery energy storage system, a super capacitor energy storage system and a flywheel energy storage system.

8.  The system according to any of the preceding claims, particularly with the features of claim 2, wherein the controller (50) is configured for droop control.

9.  The system according to the preceding claim, wherein the electrolysis system (20) comprises a plurality of electrolysis units (22a, 22b, 22c) that are arranged together, particularly in electrolyser rows that are switched in parallel,
    wherein the electrolysis system (20) comprises substantially no overload capacity.

10. The system according to any of claims 3-9, wherein the energy storage system (34) comprises a plurality of energy storage components, and wherein the plurality of energy storage components are arranged together.

11. The system according to any of the preceding claims with the features of claim 2, wherein the additional electric load system (30) is configured for providing electric energy to the first electric load system (20) if the grid frequency does not exceed the frequency threshold value.

12. The system according to any of the preceding claims, wherein the additional electric load system (30) is configured for dissipating and/or storing at least 2%, preferably at least 5 % of a nominal power of the electrolysis system (20).

13. The system according to any of the preceding claims, wherein the system is configured for operating in limited frequency sensitive mode-overfrequency, particularly in limited frequency sensitive mode-overfrequency and limited frequency sensitive mode-underfrequency.

14. A method for operating a system comprising an electrolysis system (20), a controller (50) and an additional electric load system (30), the method comprising

   i. operating the electrolysis system (20) with electric power received from a power grid (10),
   ii. dissipating and/or storing electric energy from the power grid (10) by the additional electric load system (30) based on a control signal,
   iii. monitoring a frequency of the power grid (10), generating the control signal based on the grid frequency, and sending the control signal to the additional electric load system (30) by the controller (50) .

15. The method according to the preceding claim, wherein, at least if the grid frequency deviates from a predetermined frequency range, particularly exceeds a frequency threshold value, generating the control signal by the controller (50) comprises generating a control signal instructing the additional electric load system (30) to store and/or dissipate energy.

16. Method according to any of the two preceding claims, wherein the system comprises the features according to any of claims 3-13.

Fig. 1

Fig. 2

EP 4 697 540 A1

**Fig. 3**

**Fig. 4a**

**Fig. 4b**

EP 4 697 540 A1

Fig. 5

Fig. 6

**Fig. 7b**

**Fig. 7a**

S1

S2

S3

**Fig. 8**

Europäisches
Patentamt

European
Patent Office

Office européen
des brevets

# EUROPEAN SEARCH REPORT

**Application Number**

**EP 24 19 4050**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/213370 A1 (VESTAS WIND SYS AS [DK]) 9 November 2023 (2023-11-09) * page 2, line 2 - page 5, line 14 * * page 7, line 14 - page 12, line 31; figure 1 * * page 28, line 15 - line 24 * ----- | 1-16 | INV. H02J3/24 ADD. H02J3/28 H02J15/00 |
| X | WO 2023/213377 A1 (HUAWEI DIGITAL POWER TECH CO LTD [CN] ET AL.) 9 November 2023 (2023-11-09) * page 2, line 15 - page 8, line 5 * * page 11, line 3 - page 16, line 14; figures 1-6 * ----- | 1-16 | |
| X | CN 118 300 156 A (ELECTRIC POWER SCIENCE RES INST OF STATE GRID ANHUI ELECTRIC POWER CO) 5 July 2024 (2024-07-05) * the whole document * ----- | 1-16 | |
| X | US 2022/224117 A1 (HAUCK HERIBERT [DE]) 14 July 2022 (2022-07-14) * paragraph [0020] - paragraph [0034] * * paragraph [0042] - paragraph [0052]; figures 1-3 * ----- | 1-16 | TECHNICAL FIELDS SEARCHED (IPC) H02J C25B |

The present search report has been drawn up for all claims

| Place of search | Date of completion of the search | Examiner |
|---|---|---|
| Munich | 16 January 2025 | Mäki-Mantila, Harri |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 4 697 540 A1

## ANNEX TO THE EUROPEAN SEARCH REPORT
## ON EUROPEAN PATENT APPLICATION NO.

EP 24 19 4050

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | | Publication date | Patent family member(s) | | Publication date |
|---|---|---|---|---|---|
| WO 2023213370 | A1 | 09-11-2023 | NONE | | |
| WO 2023213377 | A1 | 09-11-2023 | CN | 117561660 A | 13-02-2024 |
| | | | EP | 4490826 A1 | 15-01-2025 |
| | | | WO | 2023213377 A1 | 09-11-2023 |
| CN 118300156 | A | 05-07-2024 | NONE | | |
| US 2022224117 | A1 | 14-07-2022 | AU | 2020276632 A1 | 09-12-2021 |
| | | | BR | 112021022344 A2 | 04-01-2022 |
| | | | CA | 3139362 A1 | 19-11-2020 |
| | | | CN | 113812054 A | 17-12-2021 |
| | | | DK | 3756260 T3 | 28-02-2022 |
| | | | EP | 3739711 A1 | 18-11-2020 |
| | | | EP | 3756260 A1 | 30-12-2020 |
| | | | JP | 2022533629 A | 25-07-2022 |
| | | | KR | 20220006627 A | 17-01-2022 |
| | | | US | 2022224117 A1 | 14-07-2022 |
| | | | WO | 2020229072 A1 | 19-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Limited frequency sensitive mode. *ENTSO-E specification*, 31 January 2018